# DEMANDE DE BREVET EUROPEEN

(11) **EP 2 688 188 A1**
(43) Date de publication de la demande: **22.01.2014**
(21) Numéro de dépôt: 13177093.5
(22) Date de dépôt: 18.07.2013
(51) Int. Cl.: H02K 35/02, H02K 35/04, H04B 5/00

(54) **Dispositif d'augmentation d'autonomie**

(30) Priorité: 18.07.2012 FR 1256935
(71) Demandeur: Madar, Sasha, 94210 La Varenne Saint Hilaire (FR)
(72) Inventeur: Madar, Sasha, 94210 La Varenne Saint Hilaire (FR)
(74) Mandataire: Sonnenberg, Fred

(57) **Abrégé**

Dispositif de téléphonie ou de multimédia portatif, comprenant un ou plusieurs éléments consommateur en électricité et un agencement permettant/adapté pour générer de l'électricité avec au moins un élément mobile en rotation, ledit est solidarisé en mouvement au dispositif ou fait partie intégrante du dispositif, caractérisé en ce que le dit au moins un élément mobile comprend un élément émetteur de champ électromagnétique.

## Description

La présente invention concerne un dispositif de téléphonie et de multimédia portatif. La présente invention se réfère en particulier à un tel dispositif comportant une alimentation en électricité complémentaire ou alternative à une batterie embarquée, et permettant de manière simple et efficace d'augmenter l'autonomie d'un tel dispositif, voire même de lui procurer une entière alimentation en transformant une énergie cinétique en électricité.

### Etat de la technique

Le concept cherchant à exploiter l'énergie cinétique ou du mouvement imparti sur un dispositif électronique a été développé par la société japonaise Seiko dans les années 1970. Cette société a tenté, à travers le chargement d'une batterie d'une montre à quartz, d'exploiter un mouvement rotatif d'une masse lourde à l'intérieur de la montre à quartz. Les mécanismes proposés par Seiko nécessitent une vitesse de rotation très élevée afin de pouvoir stocker l'électricité générée dans une batterie, les pertes en énergie lors d'un stockage en batterie étant considérables en raison de l'électricité de faible tension.

Ainsi, outre l'application en montre à quartz, cette technique n'a su être adaptée à ce jour aux dispositifs de téléphonie ou de multimédia comprenant un ou plusieurs éléments consommateurs en électricité.

Les dispositifs de téléphonies actuels, également appelés smartphones, deviennent de plus en plus consommateurs en électricité. Ainsi, beaucoup d'utilisateurs, de nos jours, emportent une batterie secondaire ou d'autres chargeurs, pour se rendre plus autonomes par rapport aux besoins de recharge du dispositif moyennant une prise à disposition. Des exemples de chargeurs disponibles sur le marché comportent des mini panneaux solaires, des dispositifs à manette tournante ou même des piles à combustion.

La demande US 2010 045 241 A1 de Nokia discute également une alternative pour pouvoir utiliser ou exploiter l'énergie cinétique impartie sur un téléphone portable. La solution proposée dans le document US 2010 045 241 A1 divulgue en particulier un dispositif de téléphonie ou de multimédia portatif, comprenant un ou plusieurs éléments consommateurs en électricité et un agencement adapté pour générer de l'électricité avec au moins un élément mobile, ledit agencement faisant partie intégrante du dispositif.

Le concept proposé par Nokia exploite le fait que la batterie représente une masse lourde et un mouvement imparti sur la batterie est décrit comme pouvant être exploité moyennant un dispositif piézoélectrique. L'utilisation de l'élément piézoélectrique semble, à ce jour, non praticable en application en grande série, d'autant que les fortes tensions, qui peuvent être créées lors de la génération d'électricité par voie d'élément piézoélectrique, semblent tout à fait incompatibles avec les éléments consommateurs en électricité sensibles tels qu'on les retrouve usuellement dans des dispositifs de téléphonie ou de multimédia portatifs. De plus, même en prévoyant un découplage entre l'agencement de génération d'électricité et les éléments consommateurs, par exemple par le biais d'une batterie, le besoin de compensation de crêtes en tension, requiert une électronique complexe et onéreuse, ce qui semble interdire une réalisation à l'échelle industrielle.

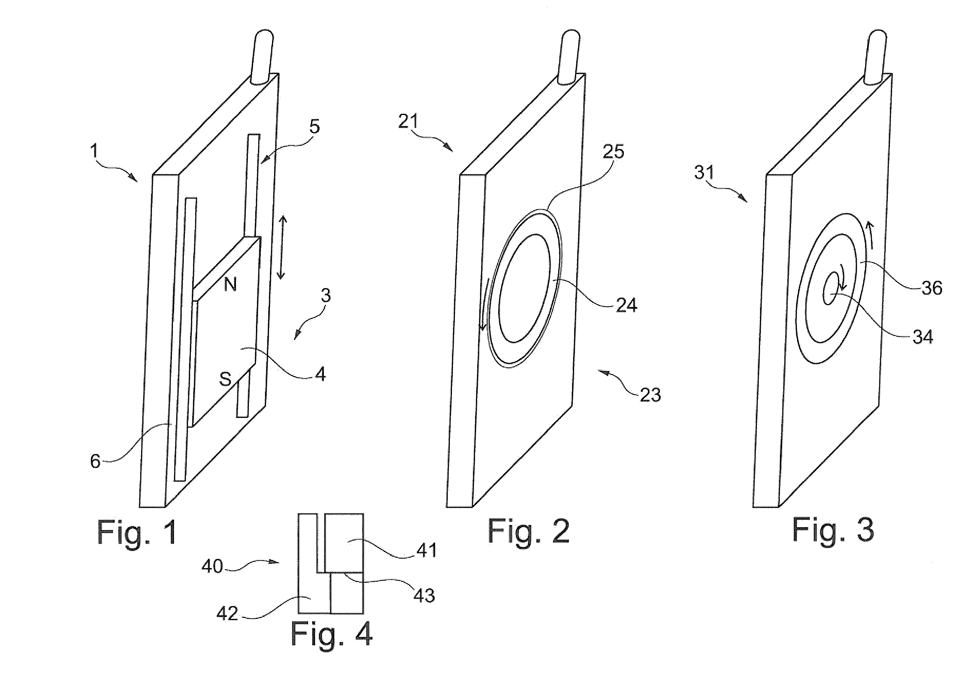

Le document WO 2007/121367, en particulier les paragraphes [0086] à [0106], décrit un dispositif de téléphonie ou de multimédia portatif, correspondant au préambule de la revendication 1 de la présente demande, et comprenant un ou plusieurs éléments consommateur en électricité et un agencement permettant/adapté pour générer de l'électricité avec au moins un élément mobile, ledit agencement faisant partie intégrante du dispositif. Différents modes de réalisation sont envisagés, dans lesquels les aimants peuvent être mobiles ou fixes. La figure 1 montre une série d'aimants agencés en ligne, avec une possibilité de mouvement de translation.

Le document US 2003/232627 décrit également dispositif de téléphonie ou de multimédia portatif, comprenant un ou plusieurs éléments consommateur en électricité et un agencement permettant/adapté pour générer de l'électricité avec au moins un élément mobile, ledit agencement faisant partie intégrante du dispositif. Une bobine interagit avec des paires d'aimants agencées en ligne.

Un objectif de la présente invention consiste à proposer un dispositif de téléphonie ou de multimédia portatif, avec un agencement adapté pour générer de l'électricité, permettant une alimentation en électricité fiable et peu onéreuse.

Un autre objectif de la présente invention consiste à proposer un dispositif de téléphonie ou de multimédia portatif, comprenant un agencement adapté pour générer de l'électricité, sans toutefois impacter les composantes électriques et électroniques usuellement présentes dans de tels dispositifs à ce jour.

### Résumé de l'invention

A cet effet, l'invention propose un dispositif de téléphonie ou de multimédia portatif, comprenant un ou plusieurs éléments consommateurs en électricité et un agencement adapté pour générer de l'électricité avec au moins un élément mobile, ledit agencement pouvant être solidarisé en mouvement avec ou faisant partie intégrante du dispositif, dans lequel l'élément mobile est mobile en rotation et comprend un élément émetteur de champ électromagnétique.

En effet, il a été trouvé de manière très étonnante qu'il est possible d'exploiter de manière viable et peu onéreuse l'énergie cinétique impartie sur un tel dispositif, par exemple lorsque l'utilisateur porte le dispositif sur lui. L'élément mobile, émetteur de champ électromagnétique, est effectivement un élément essentiel pour pouvoir générer de l'électricité. L'homme du métier comprendra que l'agencement peut être inclus dans le dispositif ou intégré dans une pochette ou un accessoire rapporté suivant le mouvement du dispositif en synchronisation.

Contrairement à la plupart des agencements actuellement connus, dans lesquels des éléments émetteurs de champ électromagnétique sont normalement prévus en tant qu'éléments immobiles et une bobine en cuivre se trouve en mouvement relatif pour y induire de l'électricité, dans un mode de réalisation particulièrement simple de la présente invention, l'élément mobile peut comprendre un aimant permanent.

La présente invention prévoit donc de tirer profit de l'inertie usuellement attribuée à l'élément émetteur de champ électromagnétique. De plus, le fait de prévoir cette partie de l'agencement en tant que pièce mobile en rotation permet une meilleure protection de cette partie de l'agencement, qui est particulièrement sensible. En particulier, une réduction du champ électromagnétique émis, due par exemple à des chocs ou des mouvements répétitifs d'une orientation constante et prédéfinie, peut ainsi aisément être évitée.

Selon des modes de réalisation préférés, il est possible d'avoir recours à une ou plusieurs des dispositions énumérées ci-après, ces dispositions pouvant être appliquées indépendamment ou en combinaison entre elles.

Selon un aspect de l'invention, ledit au moins un élément mobile émetteur de champ électromagnétique comporte un matériau présentant des caractéristiques de dipôle. Par exemple, l'élément mobile pourrait être formé ou comporter en partie de la matière en ferrite aimantée. Ceci est un exemple non limitatif et bien évidemment toute autre matière ou matériau, comme des terres rares, pourraient également être utilisés.

Dans un mode de réalisation de l'invention, l'élément mobile émetteur de champ électromagnétique présente des caractéristiques émettrices de champ électromagnétique inhérentes aux matériaux contenus par ledit élément mobile, de sorte qu'une création de champ électromagnétique ne requiert aucune autre interaction.

Un dispositif de téléphonie ou de multimédia portatif selon un autre aspect de la présente invention peut comporter l'élément mobile en remplacement d'une partie ou de toute la batterie, mais peut tout aussi bien être la batterie elle-même. Dans ce dernier cas, l'homme du métier comprendra que la batterie doit comprendre également un matériau ou des moyens émetteurs de champ électromagnétique, l'élément mobile pouvant sensiblement effectuer une translation ou n'importe quel autre mouvement à condition que, d'une manière quelconque, une électricité soit générée. Selon un aspect de la présente invention, l'élément mobile émetteur de champ électromagnétique est sensiblement en forme d'une plaquette circulaire ou d'anneau, ou cylindrique en particulier en forme d'un anneau en matériau magnétique. Des anneaux en matériau magnétique sont facilement disponibles sur le marché et il est possible de prévoir un mouvement rotatif de cet anneau pour pouvoir générer ladite électricité requise et souhaitée.

Selon encore un autre aspect de la présente invention, ledit au moins un élément mobile émetteur de champ électromagnétique présente un centre de gravité ou une répartition de poids excentré/excentrée.

Selon encore un autre aspect de la présente invention, ledit au moins un élément mobile est une masse lourde, dont le mouvement peut être entretenu et/ou induit par gravité, inertie, force de Coriolis, mouvement relatif d'éléments adjacents, alimentation en électricité, induction et/ou application d'un champ électromagnétique externe.

Comme indiqué auparavant, il est souhaitable de ne pouvoir générer de l'électricité que par le simple fait de mouvoir le dispositif entier, l'élément mobile se déplaçant à l'intérieur du dispositif exposant ainsi un élément conducteur tel qu'une bobine en cuivre à un champ électromagnétique variable. Ceci permet de créer une électricité suffisante pour pouvoir alimenter, au moins en partie, les éléments consommateurs en électricité et/ou pour maintenir l'état de charge de la batterie, voire même la recharger. Le fait de disposer d'un élément mobile émetteur de champ électromagnétique permet une conception telle que, par exemple, la rotation d'un anneau aimanté en mode de résonnance. Par ailleurs, il est possible d'envisager un entrainement externe, en prévoyant un champ électromagnétique externe variable qui entrainerait l'élément mobile également émetteur de champ électromagnétique. Il est ainsi envisageable d'induire un mouvement à l'intérieur du dispositif, sans avoir à mouvoir le dispositif lui-même, mouvement qui pourrait par exemple servir à recharger une batterie éventuellement existante.

Pour que le mouvement de l'élément mobile ne soit exposé à des pertes de frictions, il est préférable que l'élément mobile soit maintenu par des moyens magnétiques, par exemple par des moyens de paliers magnétiques. L'élément mobile peut être juxtaposé à un autre élément émetteur de champ électromagnétique de polarité opposée, de sorte que l'élément mobile peut être maintenu hors contact. Ceci permet des mouvements à très grande vitesse, par exemple une rotation très rapide, ce qui était un des objectifs pratiques non réalisables dans le concept cinétique de Seiko. De plus, un maintien par des moyens magnétiques pourrait tout aussi être utilisé pour fournir une double fonctionnalité de l'élément mobile, qui, en cas d'entrainement actif, pourrait également servir comme remplacement de vibreur. Bien entendu, cette dernière option est également possible avec un maintien par des moyens autres que des moyens magnétiques, mais ceci induit une consommation plus élevée.

Selon encore un autre aspect de la présente invention, un agencement de freinage dudit au moins un élément mobile est prévu. L'agencement de freinage peut, par exemple, être utilisé pour interdire tout mouvement de l'élément mobile lorsque le dispositif de téléphonie est utilisé pour servir de moyen de communication, afin qu'aucun champ électromagnétique variable ne persiste. Par ailleurs, il est également possible de prévoir l'agencement de freinage pour un déphasage ou au contraire une mise en phase du champ émis par l'élément mobile avec un champ électromagnétique variable propre au dispositif et/ou externe, par le mouvement dudit élément mobile. De ce fait, il est tout à fait envisageable d'ajuster les capacités de mouvement de l'élément mobile, en fonction de l'existence de champs électromagnétiques dans l'entourage ou tels que produits pour le fonctionnement propre du dispositif en question. Un tel agencement permet, par exemple, d'éviter les interférences que l'on expérimente souvent lorsque le dispositif de téléphonie se trouve en proximité d'un autoradio et lorsque le dispositif de téléphonie essaye de se raccorder à une nouvelle zone de communication.

Selon un aspect de la présente invention, ledit au moins élément mobile forme un rotor d'un assemblage adapté pour créer de l'électricité. En d'autres termes, contrairement à la plupart des générateurs usuels, il est proposé d'utiliser l'élément émetteur de champ électromagnétique en tant que rotor alors que le stator est ici un élément immobile comportant les conducteurs qui permettent de récupérer l'énergie en cas de mouvement relatif. Cette configuration est particulièrement avantageuse dans la mesure où il n'est plus nécessaire d'avoir recours à des brosses, puisque l'électricité générée peut être directement récupérée sur les composantes immobiles alors que la partie émettrice de champ électromagnétique, par exemple une bague aimantée, peut se trouver en rotation rapide et continue.

Selon encore un autre aspect de l'invention, l'élément mobile peut être entrainé pour servir de vibreur ou pour indiquer des appels ou messages entrants.

Selon encore un autre aspect de l'invention, l'élément mobile peut être entrainé de sorte que le champ électromagnétique émis puisse servir d'amplificateur d'antenne.

Selon encore un autre aspect de l'invention, il est envisagé que plusieurs éléments mobiles soient prévus par pair(es) avec des directions et des capacités de mouvement en direction opposée. Cette configuration permet un perfectionnement par rapport au rendement de la capacité à produire de l'électricité, lorsque l'on utilise deux anneaux aimantés entrainés en rotation en direction opposée.

L'électricité, qui peut être générée au sein du dispositif, peut soit être directement consommée soit être stockée à l'intérieur de la batterie intégrée. Il est également envisageable d'utiliser la masse lourde maintenue en rotation en tant que réservoir d'énergie. Cependant, il est clair que l'invention permet une grande augmentation de l'autonomie du dispositif en question, de l'électricité à extraire de la batterie est consommée uniquement si l'électricité générée est insuffisante, alors que, si le mouvement de la pièce mobile est important, il est tout à fait possible de stocker l'énergie générée dans la batterie.

Puisque l'élément mobile émetteur de champ électromagnétique permet un entrainement sans avoir besoin d'être branché ou en contact direct, il est possible de fournir un système de recharge d'un concept à induction, ce qui peut s'avérer très avantageux, dans la mesure où il suffirait de poser son téléphone portable sur une base adéquate sans qu'il ne soit nécessaire de penser à le rebrancher. De ce fait, selon encore un autre aspect, l'invention propose également un ensemble de dispositif de téléphonie ou de multimédia portatif, comprenant un dispositif de téléphonie ou de multimédia portatif tel qu'illustré précédemment et un dispositif de mise en mouvement de l'élément mobile comportant des moyens de création de champ électromagnétique variable et/ou des moyens d'entrainements mécaniques permettant de mouvoir l'élément mobile.

### Brève description des figures

L'invention sera mieux comprise, et d'autres buts, détails, caractéristiques et avantages de celle-ci apparaitront plus clairement au cours de la description suivante de plusieurs modes de réalisation de l'invention, donnée à titre d'exemple non limitatif, en référence aux dessins suivants, parmi lesquels :
- la figure 1 montre schématiquement en vue en perspective un dispositif de téléphonie ou de multimédia portatif, comprenant un ou plusieurs éléments consommateur en électricité et un agencement permettant/adapté pour générer de l'électricité avec au moins un élément mobile selon un mode de réalisation n'appartenant pas à la présente invention,
- la figure 2 montre schématiquement en vue en perspective un dispositif de téléphonie ou de multimédia portatif, selon un aspect de la présente invention,
- la figure 3 représente encore un dispositif de téléphonie ou de multimédia portatif selon un autre aspect de la présente invention,
- la figure 4 représente un ensemble de dispositif de téléphonie ou de multimédia portatif, comprenant un dispositif de téléphonie ou de multimédia portatif selon un aspect de la présente invention,
- la figure 5 représente un agencement adapté pour générer de l'électricité dans un dispositif de téléphonie ou de multimédia portatif selon encore un autre aspect de la présente invention.

### Description détaillée

Dans les différentes figures et vues, les mêmes numéros de référence indiquent des éléments ou composantes identiques ou similaires.

La figure 1 montre schématiquement en vue en perspective un dispositif de téléphonie ou de multimédia portatif 1 selon un premier aspect n'appartenant pas à la présente invention.

Le téléphone portable 1 comprend des éléments consommateurs en électricité (non représentés) et un agencement 3 permettant/adapté pour générer de l'électricité. Les éléments consommateurs en électricité, tels que les éléments électroniques, sont bien connus de l'homme du métier et ne sont pas décrits en détails dans ce qui suit.

Dans l'exemple de la figure 1, l'agencement 3 comprend un aimant permanent 4, monté mobile en translation entre deux rails de guidage 5.

Dans ce mode de réalisation, lorsque l'on secoue le portable 1, l'aimant 4 se déplace le long des rails de guidage, par exemple selon les flèches vers le haut et vers le bas respectivement sur la figure 1. Le déplacement de l'aimant 4 fournit donc un champ magnétique variable. En face de l'aimant 4, qui constitue un élément mobile selon la présente invention, se trouve un dispositif de génération et de récupération 6, apte à induire et récolter de l'électricité induit de ce fait. Un élément fixe tel qu'une bobine en cuivre est prévu pour interagir avec l'aimant mobile. De tels dispositifs sont connus de l'homme du métier.

Ainsi, il suffit de prévoir un élément fixe par exemple une bobine en cuivre qui, par le mouvement de l'aimant en tant qu'élément mobile émetteur de champ électromagnétique, et plus particulièrement par la présence d'un champ magnétique variable, expérimentera une tension fournissant une électricité générée.

La figure 2 montre schématiquement en vue en perspective un dispositif de téléphonie ou de multimédia portatif 21 selon un premier aspect de la présente invention. Le mode de réalisation de la figure 2 diffère essentiellement du mode de réalisation de la figure 1 en ce que l'élément mobile est mobile en rotation, alors que l'élément mobile de la figure 1 est mobile en translation.

Le téléphone portable 21 comprend des éléments consommateurs en électricité (non représentés) et un agencement 23 permettant/adapté pour générer de l'électricité. Un élément 24, mobile en rotation, est prévu. L'élément 24 est sous la forme d'un anneau comprenant un matériau magnétique, pour interagir avec un élément fixe tel qu'une bobine en cuivre. L'élément 24 est maintenu par des éléments de maintien 25.

Ainsi, dans le mode de réalisation de la figure 2, l'électricité peut être induite par l'interaction de l'élément fixe type bobine en cuivre et de l'anneau en matériau magnétique, qui peut tourner, par exemple, suite à un mouvement induit extérieurement sur le téléphone portable - soit en tant que force Coriolis, soit par le fait que l'anneau magnétique présente une répartition de poids excentrique. En somme, dès que l'anneau en matériau magnétique commence à tourner ou à se mouvoir, le champ magnétique intrinsèque ou matériau fournit une variabilité qui découle en la génération d'électricité de manière classique et bien connu de l'homme du métier.

La figure 3 représente encore un dispositif de téléphonie ou de multimédia portatif 31 selon encore un autre aspect de la présente invention. Le téléphone portable 31 comprend des éléments consommateurs en électricité (non représentés) et un agencement 33 permettant/adapté pour générer de l'électricité.

L'agencement 33 comprend un premier élément sous forme d'anneau 34, en matériau magnétique, mobile en rotation dans une première direction, entouré par un deuxième élément 36, apte à récolter de l'électricité induite de ce fait. Le deuxième élément 36 est sous forme d'anneau, concentrique avec le premier anneau 34, et mobile en rotation dans une deuxième direction différente de la première direction.

Le mouvement du premier anneau, en matériau magnétique, tourne, par exemple suite à un mouvement induit extérieurement sur le téléphone portable. Par exemple, le mouvement peut être induit par une force Coriolis, soit par le fait que l'anneau magnétique présente une répartition de poids excentrique.

Ainsi, dans l'exemple de la figure 3, l'augmentation relative des vitesses de rotation par l'utilisation de deux éléments rotatifs en matière aimantés est prévue, afin d'augmenter le potentiel et l'électricité générés.

Les éléments mobiles en rotation 24, 34 des figures 2 et 3 sont en forme d'anneau. L'homme du métier comprendra qu'une autre forme sensiblement circulaire ou cylindrique, telle qu'une plaquette circulaire ou un disque, est également possible.

Dans des modes de réalisation illustrés ou non-illustrés, l'homme du métier pourra également prévoir des configurations, qui lui sont en elles-mêmes bien connues, comme par exemple des moyens de freinage du mouvement de l'élément mobile. Un exemple de moyens de freinage peut être encore un champ électromagnétique ou bien des patins de freinage classiques.

De plus, les autres composantes formant le dispositif de téléphonie ou de multimédia portatif n'ont pas été détaillées plus explicitement dans la présente description afin de ne pas rendre celle-ci illisible. Tous les éléments étant classiquement utilisés et bien connus de l'homme du métier et ne reflètent pas réellement le concept inventif qui consiste, en effet, à fournir un dispositif à autonomie augmentée tel que défini dans les revendications ainsi que son intégration dans un ensemble permettant un rechargement sans avoir à contacter le dispositif électriquement.

La figure 4 représente un ensemble de dispositif de téléphonie ou de multimédia portatif 40, comprenant un dispositif de téléphonie ou de multimédia portatif 41 et un dispositif de mise en mouvement d'élément mobile 42.

Le dispositif de téléphonie 41 est similaire aux dispositifs des figures 1 à 3, en ce qu'il comprend des éléments consommateurs en électricité et un élément mobile émetteur de champ électromagnétique apte à interagir avec un dispositif d'induction d'électricité, qui peut être récupérée pour alimenter les éléments consommateurs (non illustrés).

Le dispositif de mise en mouvement d'élément mobile 42 comprend des moyens de création de champ électromagnétique variable et/ou des moyens d'entrainements mécaniques.

Une zone de réception 43 sur le dispositif de mise en mouvement d'élément mobile 42 est également prévue, pour revoir le recevoir le dispositif de téléphonie 41. Ainsi, lorsque le dispositif de téléphonie 41 est positionné dans la zone de réception, les moyens de création de champ électromagnétique variable et/ou des moyens d'entrainements mécaniques peuvent mettre en mouvement ledit élément mobile du dispositif de téléphonie 41.

En d'autres termes, le dispositif de mise en mouvement d'élément mobile 42 fournit un système de recharge d'un concept à induction, ce qui peut s'avérer très avantageux, dans la mesure où il suffit de poser son dispositif de téléphonie 41 sur la base formée par le dispositif de mise en mouvement d'élément mobile 42.

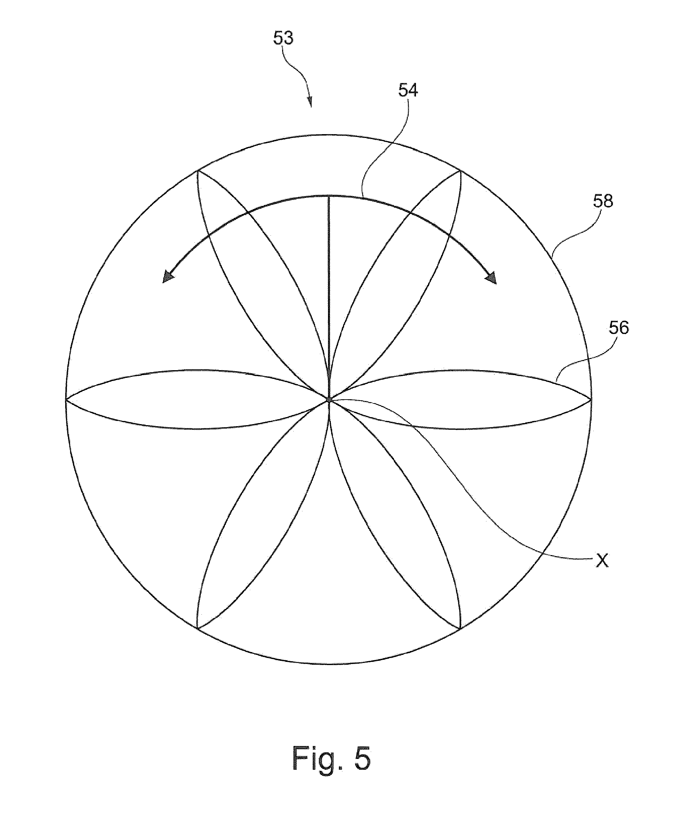

La figure 5 représente un agencement 53 permettant/adapté pour générer de l'électricité d'un dispositif de téléphonie ou de multimédia portatif selon encore un autre aspect de la présente invention.

L'agencement 53 comprend un premier élément 54 sous forme d'ancre mobile en rotation et reliée fixement à un axe X, un deuxième élément sous forme d'ailettes mobiles en rotation 56, et un troisième élément sous forme d'anneau fixe 58. Plus précisément, l'ancre 54 est mobile en rotation et entraine l'axe X en rotation. Les ailettes 56 sont également reliées à l'axe X. Lorsque l'ancre 54 est en rotation par rapport à l'axe X, l'ancre 54 entraine également les ailettes 56 en rotation, les ailettes et l'ancre étant reliées au même axe X.

Le troisième élément 58, sous forme d'anneau concentrique avec les ailettes 56, est fixe et entoure les ailettes 56 et l'ancre 54.

Le mouvement de l'ancre 54 peut s'effectuer, par exemple suite au déplacement du téléphone portable. Ainsi, l'ancre 54 étant de masse, et reliée à un axe, elle est forcée d'effectuer une rotation avec l'inertie de la masse. Le mouvement des ailettes 56, matériaux métalliques polarisés, s'effectue par transmissions d'énergie, l'ancre étant reliée au même axe que les ailettes.

L'ancre 54 est de préférence en matériau magnétique. Les ailettes 56 sont de préférence en matériaux métalliques polarisés. L'anneau fixe 58 est de préférence un élément type bobine en cuivre. La rotation des ailettes autour de l'anneau fixe 58 peut permettre de générer de de l'électricité.

Ainsi, similairement à l'exemple de la figure 3, l'augmentation relative des vitesses de rotation par l'utilisation de deux éléments rotatifs en matière aimantés est prévue, afin d'augmenter le potentiel et l'électricité générés.

Dans des modes de réalisation illustrés ou non-illustrés, l'homme du métier pourra également prévoir des configurations qui intègrent une chaine mécanique commençant par une première pièce mécanique mobile en rotation, telle une masselotte, qui comprend directement un matériau de type aimant polarisé ou émetteur de champ électromagnétique ou qui est couplée mécaniquement à un matériau de type aimant polarisé ou émetteur de champ électromagnétique mobile en rotation. La première pièce mécanique type masselotte est une pièce d'entrainement qui peut être mise en rotation par le mouvement du téléphone, suite à un mouvement induit sur le téléphone portable. Un ensemble d'engrenage entre la première pièce mécanique du type masselotte et l'élément mobile émetteur de champ électromagnétique en rotation peut être également prévu, pour transmettre et/ou augmenter la vitesse de rotation de la première pièce mécanique d'entrainement type masselotte à l'élément émetteur de champ électromagnétique mobile en rotation. Ainsi, l'élément mobile en rotation aimant ou émetteur de champ électromagnétique bénéficie de la vitesse de rotation de la masselotte et de l'ensemble d'engrenage le cas échéant. Une vitesse de rotation d'environ 5000 tr/min peut ainsi être obtenue, dans un mode de réalisation. La rotation de l'élément mobile émetteur de champ électromagnétique, en rotation en face de ou autour d'un élément fixe, de type bobine de cuivre engendre un champ électromagnétique, accompagné d'un courant alternatif, qui peut ensuite être transformé en courant continu, grâce à un redresseur.

L'agencement pour engendrer de l'électricité devant être adapté à des dispositifs de téléphonie ou multimédia portatifs type téléphone ou smartphones, il est préférentiellement prévu une dimension globale inférieure à environ 60 cm². L'élément mobile en rotation, pouvant être ou faire partie d'une masselotte, a préférentiellement un rayon d'environ 30 mm ou un rayon plus petit.

Afin d'accroitre la production électrique, et donc la rentabilité de cet agencement, on peut prévoir un mouvement en rotation satisfaisant à un phénomène de résonance.

En somme, il reste à constater que la présente invention prévoit d'utiliser, dans un dispositif type téléphone ou multimédia portatif (ou d'un accessoire rapporté à ce dernier), un élément mobile en rotation, émetteur de champ électromagnétique, pour interagir avec un élément fixe tel qu'une bobine en cuivre, et d'exploiter la mise en mouvement rotatif de l'élément mobile, impartie par exemple lorsque l'utilisateur porte le dispositif sur lui, pour engendrer tout ou partie de l'électricité nécessaire au bon fonctionnement du dispositif téléphonique portatif.

## Revendications

1. Dispositif de téléphonie ou de multimédia portatif, comprenant un ou plusieurs éléments consommateur en électricité et un agencement adapté pour générer de l'électricité avec au moins un élément mobile, ledit agencement étant solidarisé en mouvement au dispositif ou faisant partie intégrante du dispositif, dans lequel le dit au moins un élément mobile comprend un élément émetteur de champ électromagnétique, **caractérisé en ce que** le dit au moins un élément mobile est mobile en rotation.

2. Dispositif de téléphonie ou de multimédia portatif selon la revendication précédente, **caractérisé en ce que** le au moins un élément mobile émetteur de champ électromagnétique comporte un matériau présentant des caractéristiques de dipôle.

3. Dispositif de téléphonie ou de multimédia portatif selon l'une quelconque des revendications précédentes, **caractérisé en ce que** le au moins un élément mobile émetteur de champ électromagnétique est sensiblement en forme d'une plaquette circulaire, cylindrique ou d'anneau, en particulier en forme d'un anneau en matériau magnétique.

4. Dispositif de téléphonie ou de multimédia portatif selon l'une quelconque des revendications précédentes, **caractérisé en ce que** le au moins un élément mobile émetteur de champ électromagnétique présente un centre de gravité excentré ou une répartition de poids excentrée.

5. Dispositif de téléphonie ou de multimédia portatif selon l'une quelconque des revendications précédentes, **caractérisé en ce que** le au moins un élément mobile est une masse lourde, dont le mouvement peut être entretenu et/ou induit par gravité, inertie, forces de Coriolis, mouvement relatif d'éléments adjacents, alimentation en électricité, induction et/ou application d'un champ électromagnétique externe.

6. Dispositif de téléphonie ou de multimédia portatif selon l'une quelconque des revendications précédentes, **caractérisé en ce que** le au moins un élément mobile est maintenu par des moyens magnétiques.

7. Dispositif de téléphonie ou de multimédia portatif selon la revendication précédente, **caractérisé en ce que** le au moins un élément mobile est maintenu par des moyens de palier magnétique.

8. Dispositif de téléphonie ou de multimédia portatif selon l'une quelconque des revendications précédentes, **caractérisé en ce qu'**un agencement de freinage dudit au moins un élément mobile est prévu.

9. Dispositif de téléphonie ou de multimédia portatif selon la revendication précédente, l'agencement de freinage étant prévu pour déphaser ou mettre en phase le champ émis par le au moins un élément mobile avec un champ électromagnétique propre au dispositif et/ou externe.

10. Dispositif de téléphonie ou de multimédia portatif selon l'une quelconque des revendications précédentes, dans lequel une pièce d'entrainement type masselotte est couplée mécaniquement au dit au moins un élément mobile, la pièce d'entrainement étant mobile en rotation, dans lequel le mouvement de rotation de la pièce d'entrainement est transmis au dit au moins un élément mobile.

11. Dispositif de téléphonie ou de multimédia portatif selon l'une quelconque des revendications précédentes, **caractérisé en ce que** le au moins un élément mobile forme un rotor d'un assemblage adapté pour créer de l'électricité.

12. Dispositif de téléphonie ou de multimédia portatif selon l'une quelconque des revendications précédentes, **caractérisé en ce que** le au moins un élément mobile peut être entraîné pour servir de vibreur pour indiquer des appels ou messages entrants ou pour servir d'amplificateur d'antenne.

13. Dispositif de téléphonie ou de multimédia portatif selon l'une quelconque des revendications précédentes, **caractérisé en ce qu'il** comporte des éléments mobiles prévus par paires avec des capacités de mouvements en direction opposées.

14. Dispositif de téléphonie ou de multimédia portatif selon l'une quelconque des revendications précédentes, **caractérisé en ce que** l'électricité générée lors du mouvement du au moins un élément mobile est au moins en partie directement consommée par ledit un ou plusieurs éléments consommateurs en électricité, avec une option de stockage en batterie et/ou en tant que énergie cinétique.

15. Ensemble de dispositif de téléphonie ou de multimédia portatif, comprenant un dispositif de téléphonie ou de multimédia portatif selon l'une quelconque des revendications précédentes et de dispositif de mise en mouvement de l'au moins un élément mobile, comportant des moyens de création de champs électromagnétique variable et/ou des moyens d'entrainement mécanique permettant de mouvoir le au moins un élément mobile.
